# EUROPEAN PATENT APPLICATION

(11) **EP 0 597 187 A2**
(43) Date of publication of application: **18.05.1994**
(21) Application number: 93112439.0
(22) Date of filing: 03.08.1993
(51) Int. Cl.: G11B 19/20, G11B 25/04, G11B 23/00, G11B 17/038

(54) **Low profile disk assembly and attachment means for a hard disk drive**

(30) Priority: 13.11.1992 US 975757
(71) Applicant: Hewlett-Packard Company, Palo Alto, California 94304 (US)
(72) Inventor: Anderson, James C., Boise, Idaho 83704 (US); Drennan, George A., Eagle, Idaho 83616 (US); McAllister, Jeffrey S., Boise, Idaho 83704 (US)
(74) Representative: Baillie, Iain Cameron

(57) **Abstract**

A low profile, 1.3 form factor, motor driven, hard disk assembly (8) and clamp (12g) includes a disk stack (13) in which a disk is adhesively bonded to each of opposite annular axial surfaces of a spacer ring (13c), the central opening of each disk (13a,13b) leaving an exposed inner annular surface (13c3) of each opposite annular axial surface. The spacer ring is fitted about a tubular hub (12a) of the disk motor rotor (12), one inner annular axial surface (13c3) of the spacer ring (13c) seating upon the shoulder (12a21) on the tubular hub (12a), and the opposite inner annular axial surface (13c3) of the spacer ring being engaged by a clamp (12g) secured to the tubular hub (12a). An annular groove (13c2) in each of the opposite annular axial surfaces (13c1) between the disk and the inner annular portions, isolates clamping stress on the spacer ring (13c) at each inner annular axial surface (13c1) from the adjacent spacer ring annular axial surface (13c1) where the respective disks (13a,13b) are adhesively bonded and also functions to catch adhesive out flow at the disk ring inner face (13c1) during the application of bonding pressure.

## Description

### Technical Field

This invention relates to small form factor hard disk drives and particularly to low profile hard disk assemblies, including the motor drives therefore.

### Background of the Invention

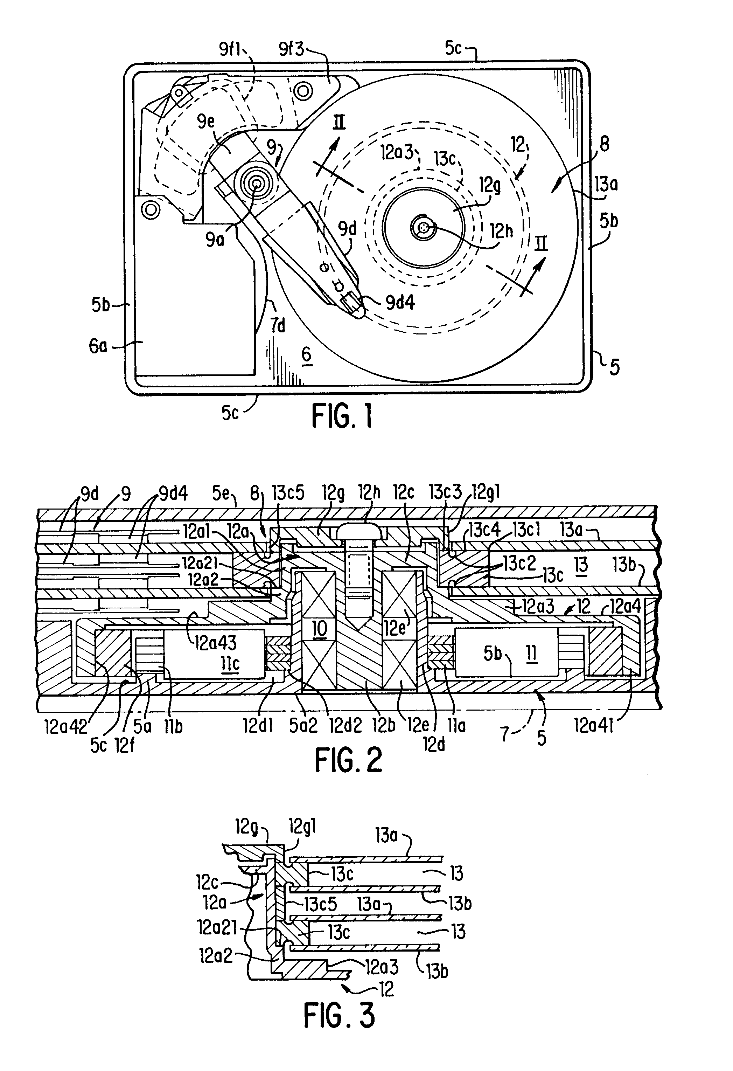

Conventional fixed, hard memory disk stack assemblies and mounts employ clamping arrangements in which one or more hard disks spaced by spacer rings are clamped between a flange at one end of the disk bearing hub and a clamp attached, as by screws, to the other end of the disk bearing hub. Such an arrangement, referenced as prior art, appears in Fig. 1 of US Patent 4,945,432, Matsudaira et al, in which the disks are concentrically disposed of the axis rotation of a disk bearing hub and are axially spaced by spacer rings in a stack between a bottom flange on the hub and a top clamp which is attached to the hub. The application of a clamping force to the top disk of the disk stack or to a single disk, in the case where only one disk is used, often distorts the plane of the disk(s), resulting in axial displacement of a portion of the disk surface which curves the disk surface in a circumferential direction. Clamping forces on the disk also cause disk run out, i.e., radial displacement from concentricity. In a fixed, hard disk stack structure of multiple disks, such disk clamping also frequently causes relative circumferential displacement among the disks.

In prior art hard disk stacks of the typed described, stresses from mechanical shock and stresses from thermal cycling are also frequent causes of disk displacement relative to the hub and to one another. Stresses at joints between the engaged faces of the disk and hub and the disks and spacer rings, resulting from either mechanical shock or differing thermal dimensional responses result in slip at the interfaces causing unacceptable mis-registration.

While such fixed hard disk stack assemblies have found extensive use in disk drives where, for storage density, the described displacements were within acceptable limits, they are not useable in smaller drives, or, more generally, in any disk drive of higher track and bit densities, in which mis-registration tolerances are less than the described displacements.

Matsudaira et al employ resilient disk spacing materials including an adhesive to achieve axial compliance, but rely upon disk stack clamping forces acting on the disks to mount the disk stack and to hold it together, the forces being applied to the disks at the opposite ends of the stack.

Thus Matsudaira et al, neither present a teaching of a hard disk stack structure in which there is no clamping pressure or force on the hard disks when installed nor a teaching of the use of an adhesive as the sole means for attaching the disks to a rotatable body to form an integrated memory disk structure. Further, Matsudaira et al give no thought to providing such a disk stack structure which is detachable as an assembled disk stack from a disk spindle or bearing housing.

US Patent 5,031,062 to Joseph A. Wood et al, like Matsudaira et al, employs an adhesive in a disk stack assembly but for a different purpose. Wood et al are concerned only with reinstalling the disk under clamping pressure and for this reason employ a flowable filler material, preferably an adhesive, which "reduces any differences in the surface topography of the disk and the accompanying clamping-related parts." The adhesive is applied to individual spacer rings which space the disks on the hub. The disks are stacked on the hub with the spacer rings therebetween, after which clamping pressure is applied by a clamp ring. Here, again, there is no teaching presented of a disk stack structure in which there is no clamping pressure or force on the disks when installed.

In rigid or hard disk drives in which the disk assembly is provided as a disk cartridge, the cartridge may be inserted and removed from the drive. Such disk cartridge structures, whether employing single or multiple disks, while affording ease of insertion and removal of the disks, lack the overall structural integrity of a fixed hard disk drive and are not functionally adaptable to small form factor disk drives, such as those smaller than the 3t inch form factor.

Flexible disks, also known as floppy disks, are commercially available in single disk jackets. Typical structures are described in US Patents 4,704,181 (Kubo), 4,670,803 (DeMoss et al), 4,794,480 (Jones et al) and 4,562,505 (Mroz). The jackets have openings for admitting a drive spindle and a read/write head to the disk. The undesirable wear of the disks where they are engaged by the spindle, is noted by the patent Mroz together with prior art attempts to avoid such wear, describing the unsatisfactory use of adhesives to attach reinforcing members, mechanical clamps for attaching reinforcing members and the use of microscopic spot welding for reinforcements.

The short comings of such prior art approaches are noted. Such short comings are said to be overcome by the patented arrangement of Mroz, in which a plastic disk is positioned concentrically between a metallic hub and a metallic ring. The hub and the ring are joined by laser welds which extend between the hub and the rings through the disk.

In all instances, such reinforcements are independent of reinforcements on other disks. There is no integration of floppy disks in a disk stack and the technology is unrelated to hard disk assemblies.

### Summary of the Invention

A fixed hard disk drive is disclosed having a fixed, but easily removable, integrated hard disk assembly of one or more disks. The integrated disk assembly comprises a disk mounting ring of substantially rectangular cross section. A circumferential groove, in each axial face of the disk mounting ring, between the outer and inner diameters of the ring, defines an outer annular axial surface for mounting a disk and an inner annular axial surface in each axial face. The inner axial annular surfaces are clamped to a disk motor rotor, there being no clamp engagement with either disk.

The axial surfaces of the ring are lapped to approach near perfect flatness for the purpose of providing flat inner clamping surfaces over which clamping forces are uniformly distributed and, more importantly, providing flat outer annular disk mounting surfaces. A disk, having a central opening, may be adhesively bonded to either or both of the outer annular surfaces of the disk mounting ring, depending upon the application. Disk attachment is concentric of the ring in a position in which the edge of the central opening overlaps the outer edge of the groove. The grooves function as stress relievers and as adhesive overflow reservoirs.

The best mode for practicing this invention involves its application in a 1.3 form factor disk drive. In this application, two glass or ceramic disks are employed, one adhesively bonded to each flat, outer annular surface. The disk mounting ring precisely axially spaces the disks and the flatness of the outer annular surfaces obviates disk warping. Metallic disks may be substituted for the glass or ceramic disks.

A permanent magnet, salient pole, radial gap, DC disk motor has a disk motor rotor. The disk mounting ring is fitted on a cylindrical hub of the disk motor rotor and one of its inner annular axial surfaces seats upon a hub shoulder. A clamp on the hub engages the other inner annular axial surface of the disk mounting ring, which secures the hard disk assembly to the disk motor rotor. The disk or disks are not subject to such clamping pressure.

A rotary actuator comprising an armstack of four arms, pairs of which straddle respect disks, each resiliently mount a transducer adjacent a distal end thereof, in a position to fly on the air bearing at the adjacent disk surface as the disk rotates, for scanning the surface of the disk.

When the disk assembly is mounted upon the motor rotor, the drive qualifies as a fixed hard disk drive, yet the disk assembly is easily removable as an integrated stack, if replacement or servicing is needed, by the simple expedient of removing the clamp. If desired, other disk assemblies with other data are thus also easily substituted.

### Brief Description of the Drawings

The invention will be better understood by reference to the following specification when considered in conjunction with the accompanying drawings in which:
Fig. 1 is a plan view of a disk drive employing a hard disk assembly embodying the principles of this invention.
Fig. 2 is a cross sectional view taken in a section plan II II of Fig. 1, and
Fig. 3 is a cross sectional view illustrating stacking of the disk assemblies on a hub.

### Best Mode For Practicing The Invention

Figs. 1 and 2 illustrate, respectively, plan and sectional views of a small form factor (1.3 form factor), hard disk drive embodying the principles of this invention. These figures are drawn to a greatly enlarged scale, Fig. 2 being a further enlargement of Fig. 1, to permit the illustration of essential detail. The sectional view of Fig.2 is directed to the disk assembly of the hard disk drive.

A mainframe or support structure 5 of metal, such as aluminum, which is the backbone, i.e., the primary structural member of the disk drive structure, is preferably a single piece of milled or cast metal which is precision machined, having a base plate 5a, end walls 5b and side walls 5c. The end walls 5b and the side walls 5c, being an integral part of the base plate 5a increase the stiffness of the mainframe 5 with respect to bending and twisting. This together with careful recessing of the inner surface 5a1 of the base plate 5a, to clear parts of the drive, to generally maintain an overall maximum base plate thickness, provides a support which is stable, both in configuration and dimension, in a degree suitable for a portable, rotary actuator type of hard disk drive 6. The base plate 5a has a flat bottom or outer surface 5a2 to which a printed circuit board 7 may be attached. The printed circuit board 7 is shown in dot dash outline in Fig. 2. Where the disk drive is embodied in a PC Card, the printed circuit board 7 for the disk drive is preferably disposed upon the inner surface 5a1 of the base plate 5a beside the hard disk drive 6. A flat flexible electrical cable 7d connects the printed circuit board 7 to the hard disk drive 6 via a connector 6a, in the structure seen in Fig. 1. The printed circuit board 7 conventionally comprises electronic systems and circuits, including a disk controller, providing a processing and control function for translating requests for reading or commands for writing from an electronic digital processor or a host computer depending upon the application, into track and track sector indications, providing controls for track seeking and track following, and, during track following, providing sector identity and timing controls for read/write modes of operation.

A cover 5e is secured, as by adhesive bonding, to the upper edges of the end walls 5b and the side walls 5c of the mainframe or support 5 to seal and further stiffen the assembly.

The hard disk drive 6 comprises a hard disk assembly 8 and a rotary 8 actuator assembly 9.

The rotary actuator is journaled on a spindle 9a and comprises four arm structures 9d, one above and one below each hard disk 13a, 13b of the hard disk assembly 8. Each arm structure 9d mounts a magnetic head 9d4 at its distal end. Only the upper arm structure is seen in Fig. 1. An actuator motor arm 9e mounts a coil 9f1 of an axial gap actuator motor. The electromagnetic field of the coil 9f1 links a permanent magnet field of a permanent magnetic structure 9f3 on the mainframe or support 5. As is known, the coil is reversibly energized to move the rotary actuator.

The hard disk assembly, which is the subject of this invention, is described herebelow.

The hard disk assembly 8, comprises a salient pole, direct current disk motor 10 which has a salient pole stator 11 and an umbrella shaped, disk motor rotor 12. A hard disk assembly 13 comprising a pair of disks 13a, 13b is secured to the disk motor rotor 12.

The disk motor rotor 12 comprises a tubular hub 12a having a central, axially motor shaft 12b projecting from a hub end face 12c. The mainframe or support 5 supports a tubular motor mount 12d which projects from the support 5, preferably, it is an integral part of the support 5. An axial bearing pair 12e journals the motor shaft 12b within the tubular motor mount 12d.

The tubular motor mount 12d is provided with an enlarged diameter cylindrical section 12d1 at its bottom end defining a shoulder 12d2. The salient pole stator is a laminated assembly of thin metal flux conducting plates comprising a circular center section 11 a and individual, radially disposed, salient poles 11 b. The circular center section 11 a of the salient pole stator 11 seats upon and is adhesively bonded to the shoulder 12d2. The ends of the salient poles 11 are adhesively bonded to an annulus 5a projecting from the base 5, concentrically disposed of the tubular motor mount 12d. Individual coils or windings 11 are respectively mounted on each salient pole, the bottom side of each winding projecting into a recess 5b defined between the cylindrical section 12d1 of the tubular motor mount 12d and the annulus 5a.

The disk motor rotor 12 is an integral structure of a magnetic flux conducting material configured of differing cylindrical sections of several different diameters, increasing in diameter from the top to the bottom of the rotor 12. The top cylindrical section 12a1 comprises the tubular hub 12a. A second cylindrical section therebelow, of larger diameter than the first cylindrical section 12a1, defines a shoulder 12a21. A third cylindrical section 12a3 of larger diameter than the cylindrical section 12a2 is of increased cross sectional area to enhance structural integrity and the lowermost and largest diameter cylindrical section 12a4, having a depending rim 12a41, defines the peripheral rim of the disk motor rotor. The depending rim 12a41 projects into an annular recess 5c about the annulus 5a. An annular, spot magnetized, permanent magnet ring 12f is adhesively bonded to the inner circumferential surface 12a42 of the depending rim 12a41, in a position encircling the ends of the salient poles 11 b, defining radial gaps therebetween. The annular permanent magnet 12f is radially spot magnetized in equally circumferentially spaced positions, greater in number than the number of salient poles 11 b. Energization of the windings 11 c for constant speed motor operation is conventional.

The disk assembly 13 comprises a stack of two hard disks 13a and 13b, of non-metallic material such as ceramic material or glass, which are adhesively bonded to opposite axial faces 13c1 of a spacer ring 13c of substantially rectangular cross section. Annular grooves 13c2 are formed in the opposite axial faces 13c1 of the spacer ring 13c defining an inner annular axial surface 13c3 and an outer annular axial surface 13c4 on each of the opposite axial faces 13c.

Each disk has a central circular opening 13c5. Each disk is adhesively bonded to the outer annular axial surface 13c4, in which position the edge of the circular opening 13c5 is positioned substantially over the center of the groove. The spacer ring 13c is a slip fit over the tubular hub 12a. The bottom inner annular surface 13c3 seats upon the shoulder 12d2 which precisely axially indexes the disk assembly 13 with respect to the rotary actuator arm structures 9d. The rim 12g1 of a circular clamp 12g, adjacent the end face 12c of the tubular hub 12a, bears upon the inner annular axial surface 13c3 on the upper axial surface of the spacer ring 13c. A screw 12h clearing through a central opening in the circular clamp 12g axially threads into the shaft 12b of the tubular hub to apply clamping pressure, securing the spacer ring 13c between the shoulder 12a21 and the clamp rim 12g1 without contacting the disks 13a or 13b.

In this position of the spacer ring there is no pressure due to a clamping force applied to the disks 13a, 13b. The sole attachment of the disks 13a and 13b to the spacer ring 13c is by adhesive bonding. Clamping forces act solely upon the spacer ring 13c. This is essential in the small form factor disk drives such as the 1.3 form factor drive of this invention. Here, bit density is high and precision in part fabrication, assembly and mechanical stability in the operational environment are all essential. To assure that the opposite axial surfaces 13c1 of the spacer ring 13c are flat and parallel, the surfaces are lapped. Thus flatness of the disks when adhesively bonded to the outer annular axial surfaces 13c4 is guaranteed. The application of clamping force only to the spacer ring, avoiding all contact of the disks 13a, 13b with any part of the motor rotor 12 or the circular clamp 12g, obviates disk warping.

The annular grooves 13c2 have two important functions. One is to mechanically isolate the inner and outer annular axial surfaces 13c3 and 13c4. Thus, clamping forces applied to the inner annular axial surface 13c3 are not directly coupled to the adhesive bonding area of the disks to cause disk warp or other disk displacement. The other important function is as an adhesive reservoir to catch surplus adhesive squeezed from between the disk bonding area under clamping pressure during fabrication of the disk assembly. An additional groove in each axial face 13c1 adjacent the outer peripheral edge of the ring 13c may function as an adhesive reservoir.

The disk assembly 13 is an integrated stack which is easily assembled and easily installed and removed with respect to the tubular hub 12a, as an integrated assembly.

The diameter of the third cylindrical section 12a3 of the rotor 12 is made as large as possible to strengthen the rotor and to ensure structural integrity and stability while remaining clear of the inner radial limit of the transducers 9d4 on the rotary actuator arms 9d. The annular axial face 12a43 of the fourth cylindrical section 12a4 of the rotor 12, clears the lowermost actuator 9d. The inner surface of the cover 5e is similarly spaced from the upper surface of the upper disk 13a to provide actuator arm/transducer clearance.

A disk stack may comprise additional such disk assemblies with spacer rings 13c5 therebetween to provide proper spacing between adjacent disks in the respective stacks. Such a stack is seen in Fig. 3 drawn to a reduced scale. Again the disk stack is easily assembled and disassembled keeping the individual two disk assemblies 13 intact.

Instead of a separate spacer ring 13c5, each spacer ring may formed as an integral ring portion of a spacer ring 13c approximately one-half the axial dimension of the spacer ring 13c5, or, the spacer ring 13c5 may be an integral part or only one spacer ring 13c.

Variations of these organizational concepts of disk assemblies and disk mounts will be readily apparent to one skilled in the art.

## Claims

1. A hard disk assembly comprising:
a. a support member (5);
b. a motor (10) on said support member (5), said motor (10) having a stator (11) and a rotor (12);
c. said rotor (12) having a concentric tubular hub (12a) terminating in an upper end face (12c) and having a circumferential shoulder (12a21), axially displaced on said tubular hub (12a) from said end face (12c);
d. a disk mounting ring (13c), having upper and lower opposite annular axial surfaces (13c1), concentrically disposed about said tubular hub (12a) of said rotor (10) with an inner annular surface portion (13c3) of said lower axial surface (13c1) seated upon said shoulder (12a21);
e. a clamp (12g) disposed adjacent to said end face (12c) engaging an inner annular surface portion (13c3) of said upper annular axial surface (13c1) of said ring (13c) adjacent said tubular hub (12a);
means (12h) securing said clamp (12g) to said tubular hub (12a) for clamping said ring (13c) between said shoulder (12a21) and said clamp (12g), and
f. a hard disk (13a or 13b) having a central circular opening, an inner annular disk portion of said hard disk adjacent said central circular opening being adhesively bonded to one annular axial face (13c3) of said upper and lower annular axial faces (13c1) of said ring (13c) in a position concentrically disposed of said rotor (12) and solely in contact with said one annular axial face (13c1) of said ring (13c).

2. The hard disk assembly according to claim 1, comprising a second hard disk (13b or 13a) having a central circular opening, an inner annular portion of said second hard disk adjacent said central circular opening being adhesively bonded to the other of said upper and lower annular axial faces (13c1) of said ring (13c) in a position concentrically disposed of said rotor (12) and solely in contact with said other axial face (13c1) of said ring (13c).

3. The hard disk assembly according to claim 2, comprising:
a. an annular groove (13c2) in each annular axial surface (13c1) of said ring (13c) at corresponding radial positions adjacent said central circular opening of said disk, dividing each annular axial surface (13c1) of said ring (13c) into an inner annular surface portion (13c3) and an outer annular surface portion to which said disks (13a,13b) are respectively adhesively bonded, said grooves (13c2) reducing clamping stress transmission from said inner annular surface portions (13c3) to said outer annular surface portions.

4. The hard disk assembly according to claim 3, in which:
a. said grooves (13c2) each partially radially overlap the respective disks (13a,13b)at the edge of said central opening of each, to additionally function as an adhesive reservoir to receive adhesive squeezed from the interface of said disk and said ring.

5. The hard disk assembly according to claim 2, comprising:
a. a second hard disk assembly (13) of two disks (13a,13b), and
b. a separate spacer ring (13c5) between said hard disk assemblies (13a,13b) having an annular axial face (13c1) bearing against an inner annular face (13c3) of each spacer ring adjacent said tubular hub (12a) and spacing the adjacent disks (13a,13b) of the respective disk assemblies (13) a distance correspond to the distance between the disks (13a,13b) of a single disk assembly-(13).

6. The hard disk assembly according to claim 1 or 2 in which: said disk (13a or 13b) is of a hard non metallic material.

7. The hard disk assembly according to any one of the preceding claims comprising:
a. an annular groove (13c2) in said one axial surface (13c1) of said ring adjacent said central opening of said hard disk (13a, 13b), dividing said one annular axial face (13c1) into said inner annular surface portion (13c3) and an outer annular surface portion to which outer annular surface portion said hard disk (13a,13b) is adhesively bonded, for reducing clamping stress transmission from said inner annular surface portion (13c3) to said outer annular surface portion of said one axial surface (13c3) of said ring (13c).

8. The hard disk assembly of claim 6, in which: a. said groove (13c2) partially radially overlaps said disk at the edge of said circular opening to additionally function as an adhesive reservoir to receive adhesive squeezed from the interface of said disk (13a,13b) and said ring (13c).

9. The hard disk assembly according to any one of the preceding claims, in which:
a. said clamp (12g) is substantially circular, having a depending peripheral clamping edge (12g1) engaging said inner annular surface portion (13c3) of said upper annular axial surface (13c1) of said ring (13c).
